# EUROPEAN PATENT APPLICATION

(11) **EP 4 249 287 A1**
(43) Date of publication of application: **27.09.2023**
(21) Application number: 21894233.2
(22) Date of filing: 30.04.2021
(51) Int. Cl.: B60C 9/08, B60C 9/18, B60C 9/20, B60C 9/22

(54) **PNEUMATIC TIRE FOR AIRCRAFT**

(30) Priority: 19.11.2020 JP 2020192348
(71) Applicant: BRIDGESTONE CORPORATION, Chuo-ku Tokyo 104-8340 (JP)
(72) Inventor: ICHIHARA, Eiji, Tokyo 104-8340 (JP); KOCHI, Naoto, Tokyo 104-8340 (JP); TAMURA, Juntarou, Tokyo 104-8340 (JP)
(74) Representative: Marks & Clerk LLP
(86) International application number: PCT/JP2021/017278
(87) International publication number: WO 2022/107356

(57) **Abstract**

A pneumatic tire for aircraft according to this disclosure has belt layers arranged in the following order from the inside of the tire radial direction: the inner zigzag belt layers, the spiral belt layers, and the outer zigzag belt layers, and among the belt layers, the inner zigzag belt layer has the maximum width in the tire width direction.

## Description

### TECHNICAL FIELD

This disclosure relates to a pneumatic tire for aircraft.

### BACKGROUND

Conventionally, the pneumatic tires for aircraft have been proposed: which have a pair of bead cores, a radial carcass comprising one or more carcass plies extending toroidally between the bead cores, and a belt layer as a tread reinforcement member on the radial outer side of the radial carcass in the tread portion; the above belt layer consists of a spiral belt layer made of ribbon-like organic fibers wound in an abbreviated circumferential direction, inclination angle of 5 degrees or less to the tire equatorial plane, and a zigzag belt layer, located on the outer side of the spiral belt layer in the tire radial direction, made of ribbon-like organic fibers wound at an angle of 5 to 30 degrees to the tire equatorial plane and folded at both ends of the belt; and the width of the zigzag belt layer is smaller than the width of the spiral belt layer (PLT 1).

### CITATION LIST

### Patent Literature

### PTL 1: 2020-100253A

### SUMMARY

### (Technical Problem)

In recent years, increased environmental awareness has led to strong demand for longer tire life also in pneumatic tires for aircraft. Improving the wear resistance performance is effective in extending tire life. In this regard, since the art described in Patent Document 1 sets the width of the above zigzag belt layer smaller than that of the spiral belt layer, the in-plane shear deformation of the zigzag belt layer increases when the tire is subjected to lateral forces. As a result, when the aircraft turns, the tire deforms significantly in the lateral direction, resulting in deteriorated wear resistance performance during turning.

### (Solution to Problem)

On the contrary, if the width of the zigzag belt layer is simply increased in the above belt structure, the distance from the outer surface of the tire to the zigzag belt layer near the belt edge thereof will become smaller, resulting in early exposure of the zigzag belt layer. It is also possible to place the zigzag belt layer on the inside of the spiral belt layer in the tire radial direction, but in this case, the spiral belt layer, which bears a large amount of tension, would be located at the outermost layer in the tire radial direction, and there is concern that the belt cord could be easily damaged if sharp foreign objects were to stuck in the tire.

It is therefore an object of this disclosure to provide a pneumatic tire for aircraft that can achieve longer tire life by improving wear resistance performance when the aircraft is turning, by making the belt less likely to be exposed when the tire is worn, and also by making it difficult for the belt to be damaged by foreign objects.

The following is the abstract structure of this disclosure.
(1) A pneumatic tire for aircraft comprising:
   a pair of bead portions;
   a carcass comprising one or more carcass plies spanning the pair of bead portions in a toroidal shape; and
   a belt consisting of three or more belt layers disposed radially outwardly of the crown portion of the carcass; wherein
   the belt includes,
   one or more spiral belt layers consisting of a ribbon-like first strip member made with a first belt cord coated with rubber, spirally wound in the circumferential direction of the tire, and
   two or more zigzag belt layers consisting of a ribbon-like second strip member made with a second belt cord coated with rubber, spirally wound in the circumferential direction of the tire so that the following manners are repeated: extending from one tire width direction end to the other tire width direction end, folded back at the other tire width direction end, extending from the other tire width direction end to the one tire width direction end, folded back at the one tire width direction end, and extending again from the one tire width direction end to the other tire width direction end,
   the zigzag belt layers include one or more inner zigzag belt layers and one or more outer zigzag belt layers located outside the inner zigzag belt layers in the tire radial direction,
   the belt layers are arranged in the following order from the inside of the tire radial direction: the inner zigzag belt layers, the spiral belt layers, and the outer zigzag belt layers, and
   among the belt layers, the inner zigzag belt layer has the maximum width in the tire width direction.

The width in the tire width direction of each belt layer herein shall mean the width in the tire width direction in the cross section of the tire width direction when the pneumatic tire for aircraft is mounted on an applicable rim, filled to prescribed internal pressure, and unloaded. Hereinafter, referred to as the reference condition.

As used herein, "applicable rim" refers to the standard rim (Design Rim) in the applicable size as described or as may be described in the future in the latest edition of the AIRCRAFT YEAR BOOK or the latest edition of the EDI (Engineering Design Information for Aircraft Tires) published by TRA (The Tire and Rim Association, Inc.) in the United States. The 2017 edition is used for numerical descriptions herein. For sizes not listed in the above standards, "applicable rim" shall mean the rim applicable to the tire.

In addition, "prescribed internal pressure" means the air pressure, i.e., maximum air pressure, corresponding to the maximum load capacity of a single wheel in the applicable size and ply rating, as described in the above standard. For sizes not listed in the above standards, "prescribed internal pressure" shall mean the air pressure, i.e., maximum air pressure, corresponding to the maximum load capacity prescribed for each vehicle in which the tire is mounted.

The elastic modulus of the belt cord herein refers to, in accordance with the standard number JIS L 1017:2002, "Test Method for Chemical Fiber Tire Cords", the cord elastic modulus (N/cm) per one centimeter width of the cord disposed in the tire, obtained by multiplying the elastic modulus of a single cord (cN/dtex) calculated from the slope "s-s curve" when the single cord is elongated by 0.5% by the thickness of the single cord (dtex), and further by the number of strikes of the single cord per the one centimeter width.

### (Advantageous Effect)

According to this disclosure, it is possible to provide a pneumatic tire for aircraft that can achieve longer tire life by improving wear resistance performance when the aircraft is turning, by making the belt less likely to be exposed when the tire is worn, and also by making it difficult for the belt to be damaged by foreign objects.

### BRIEF DESCRIPTION OF THE DRAWINGS

In the accompanying drawings:
FIG. 1 illustrates a cross-sectional view in the tire width direction of a pneumatic tire for aircraft according to one embodiment of this disclosure;
FIG. 2 illustrates an enlarged view of the belt portion of FIG. 1;
FIG. 3 illustrates the spiral belt layer; and
FIG. 4 illustrates the zigzag belt layer.

### DETAILED DESCRIPTION

The following is a detailed illustrative description, with reference to the drawings, of an embodiment of a pneumatic tire for aircraft, hereinafter referred to simply as "tire", according to this disclosure.

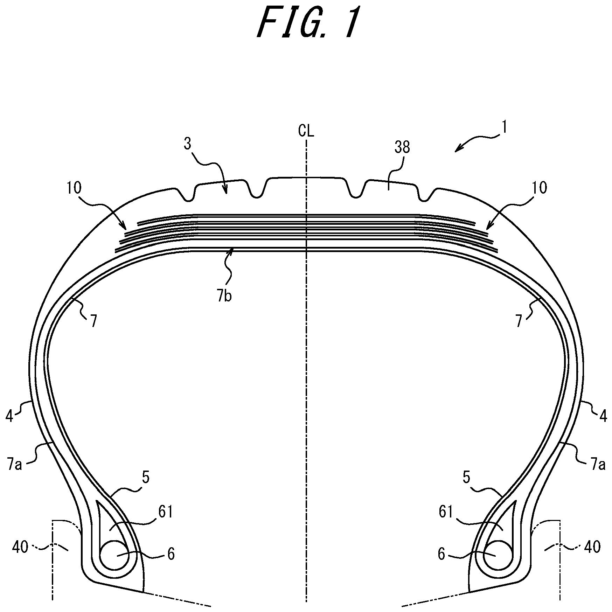

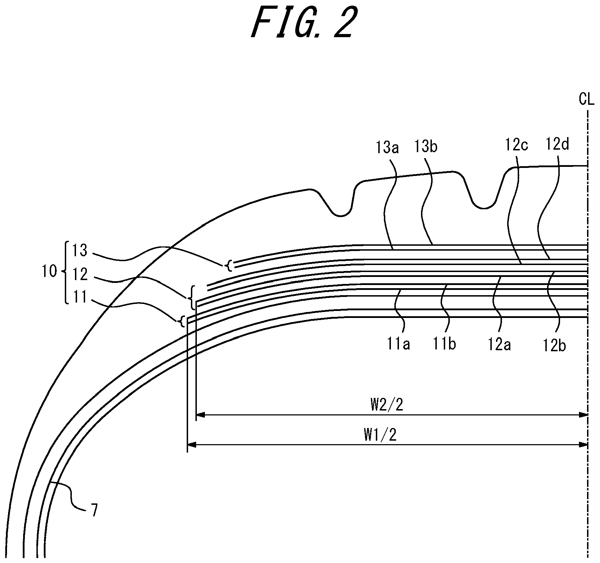

Figure 1 illustrates a cross-sectional view in the tire width direction of a pneumatic tire for aircraft according to one embodiment of this disclosure. Figure 2 illustrates an enlarged view of the belt portion of Figure 1. Figures 1 and 2 illustrate the cross section in the tire width direction in the reference state, with the tire 1 mounted on the applicable rim 40, filled to the prescribed internal pressure, and unloaded. Figure 2 illustrates a cross-sectional view of a portion of one half of the tire width direction bounded by the tire equatorial plane CL, and the same configuration is used for the other half of the tire in this example.

As illustrated in Figure 1, the tire 1 comprises a pair of bead portions 5, a carcass 7 comprising one or more carcass plies spanning the pair of bead portions 5 in a toroidal shape, and three or more belt layers 10 disposed radially outwardly of the crown portion 7b of the carcass 7. A tread portion 3 made of tread rubber 38 is disposed on the outside of the tire radial direction of the belt layers 10, and a pair of sidewall portions 4 are connected to the tread portion.

The bead core 6 is buried in each of the bead portions 5. In the illustrated example, the bead core 6 consists of an annular cable bead. In the illustration, the bead core 6 is circular in cross section. The bead wire can be, for example, high-carbon steel wire. In this example, the bead filler 61 is disposed on the outer side, in the tire radial direction, of each bead cores 6. The bead filler 61 has an abbreviated triangular cross section, tapering in the tire width direction from the inside to the outside of the tire radial direction, but the bead filler 61 can have a variety of cross sections. For example, one or more types of any known hard rubber can be used for the bead filler 61.

The carcass 7 consists of one or more, e.g., 4 to 7 carcass plies 7a. In this example, the carcass 7 is a radial carcass.

The carcass 7 consists of one or more overlapping carcass plies 7a, for example 4 to 7 carcass plies 7a are overlapped, and their ends are rolled up and secured around the bead core 6 from the inside to the outside in the tire radial direction. In the tire 1 of this embodiment, seven layers of carcass plies 7a made of nylon cords are stacked on top of each other.

A belt 10 consisting of three or more belt layers is disposed radially outwardly of the crown portion 7b of the carcass 7. Tread rubber 38 is attached to the outer circumference of the belt 10 to form the tread portion 3.

The belt 10 includes one or more spiral belt layers 12 and two or more zigzag belt layers 11, 13. The zigzag belt layers include one or more inner zigzag belt layers 11 and one or more outer zigzag belt layers 13 located outside the inner zigzag belt layers 11 in the tire radial direction. The belt layers are arranged in the following order from the inside of the tire radial direction: the inner zigzag belt layers 11, the spiral belt layers 12, and the outer zigzag belt layers 13. In the illustrated example, the belt 10 consists of a total of eight belt layers: two inner zigzag belt layers 11a, 11b, four spiral belt layers 12a, 12b, 12c, 12d, and two outer zigzag belt layers 13a, 13b. However, the number of belt layers is not limited to the above; for example, the number of inner zigzag belt layers can be 1 to 4, the number of spiral belt layers can be 1 to 8, and the number of outer zigzag belt layers can be 1 to 4. From the viewpoint of weight reduction, the total number of belt layers is preferably 10 or less.

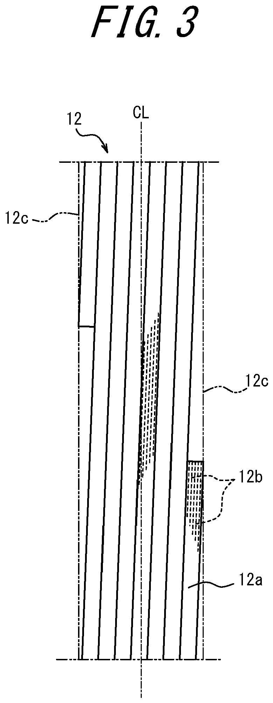

Here, the spiral belt layer 12 is explained. Figure 3 illustrates the spiral belt layer. As illustrated in Figure 3, the spiral belt layer 12 consists of a ribbon-like first strip member 12a made with a first belt cord 12b coated with rubber, spirally wound in the circumferential direction of the tire.

As the first belt cord 51b, an organic fiber cord made of aromatic polyamide such as aramid can be used, alternatively, a hybrid fiber cord made from aliphatic polyamide such as nylon or the combinations of aromatic polyamide such as aramid and aliphatic polyamide such as nylon can be used.

The hybrid cord of aliphatic and aromatic polyamide fibers may be made by twisting yarns made of aliphatic polyamide fibers with yarns made of aromatic polyamide fibers, or be made of pre-composited and twisted yarns of aliphatic and aromatic polyamide fibers.

The spiral belt layer 12 is formed by spirally winding the strip members 12a around the circumferential direction of the tire on the crown of the carcass 7 of the raw tire, with the strip members 12a deviating by a predetermined amount in the tire width direction so that no gap is created between adjacent strip members 12a. The inclination angle of the first belt cord 12b with respect to the circumferential direction of the tire is, for example, 5 degrees or less.

When the spiral belt layer 12 consists of multiple layers, the strip member 12a is folded back when it is wound up to the widthwise end edge 12c of the spiral belt layer 12 and begins to be wound around the outer surface as the next layer toward the other widthwise end edge 12c, thereby stacking them.

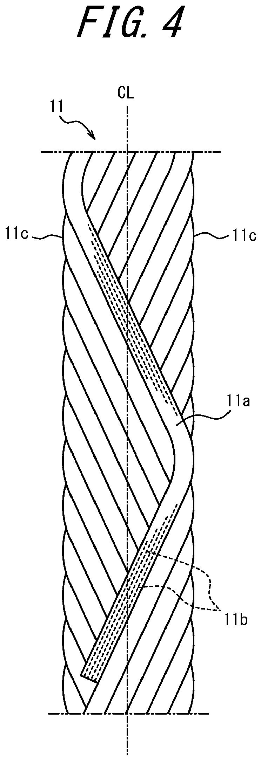

Next, the inner zigzag belt layer 11 and the outer zigzag belt layer 13 are explained. Figure 4 illustrates the zigzag belt layer. In Figure 4, the inner zigzag belt layer 11 is illustrated as an example, but the same applies to the outer zigzag belt layer 13. The zigzag belt layer 11 consists of a ribbon-like second strip member 11a made with a second belt cord 11b coated with rubber, spirally wound in the circumferential direction of the tire so that the following manners are repeated: extending from one tire width direction end 11c to the other tire width direction end 11c, folded back at the other tire width direction end 11c, extending from the other tire width direction end 11c to the one tire width direction end 11c, folded back at the one tire width direction end 11c, and extending again from the one tire width direction end 11c to the other tire width direction end 11c.

As the second belt cord 11b, an organic fiber cord made of aromatic polyamide such as aramid can be used, alternatively, a hybrid fiber cord made from aliphatic polyamide such as nylon or the combinations of aromatic polyamide such as aramid and aliphatic polyamide such as nylon can be used.

The hybrid cord of aliphatic and aromatic polyamide fibers may be made by twisting yarns made of aliphatic polyamide fibers with yarns made of aromatic polyamide fibers, or be made of pre-composited and twisted yarns of aliphatic and aromatic polyamide fibers.

Return to Figure 2, in the tire of this embodiment, among the belt layers, the inner zigzag belt layer 11 (in this example, the inner zigzag belt layer 11b) has the maximum width W1 in the tire width direction. In particular, in this example, the width in the tire width direction of any of the one or more inner zigzag belt layers 11a, 11b are greater than the width in the tire width direction of the spiral belt layer 12 and the outer zigzag belt layer 13, which has the maximum width W2 in the tire width direction (in this example, the spiral belt layer 12b).

The following is an explanation of the effects of the pneumatic tire for aircraft according to this embodiment.

In this pneumatic tire for aircraft according to this embodiment, first, the inner zigzag belt layer 11 (in this example, the inner zigzag belt layer 11b) of the belt layers has the maximum width in the tire width direction, so that the in-plane shear stiffness of the inner zigzag belt layer 11 and thus the belt 10 can be increased to reduce the tire deformation in the tire width direction when the aircraft is turning, and improve the wear resistance performance during turning. And because the inner zigzag belt layer 11b, which has such a maximum width W1 in the tire width direction, is located on the inner side of the tire radial direction, rather than the outer zigzag belt layer 13 and spiral belt layer 12, the distance from the outer surface of the tire can be secured and the inner zigzag belt layer 11b is less likely to be exposed during wear development. This makes it difficult for the inner zigzag belt layer 11b to be exposed during wear development. Furthermore, not the spiral belt layer, but the outer zigzag belt layer 13 which has a lower tension load, is disposed at the outermost in the tire radial direction, therefore less susceptible to damage from sharp foreign objects.

According to the pneumatic tire for aircraft of this embodiment, it is possible to provide a pneumatic tire for aircraft that can achieve longer tire life by improving wear resistance performance when the aircraft is turning, by making the belt less likely to be exposed when the tire is worn, and also by making it difficult for the belt to be damaged by foreign objects.

The elastic modulus of the second belt cord of the zigzag belt layer is preferably smaller than the elastic modulus of the first belt cord of the spiral belt layer. This is because the large stresses are likely to occur at the folded ends of the zigzag belt layer with a folded structure, causing failures, and the use of a belt cord with a small elastic modulus can reduce the stress, and thus suppress the occurrence of failures. The elastic modulus of the second belt cord of at least one of the outer zigzag belt layer and the inner zigzag belt layer is preferably less than the elastic modulus of the first belt cord of the spiral belt layer. However, it is particularly preferred that the elastic modulus of the second belt cord in both the outer and inner zigzag belt layers are less than the elastic modulus of the first belt cord in the spiral belt layer. For example, to achieve this elastic modulus relationship, it is also preferable that the material of the second belt cord in the zigzag belt layer is aramid cord and the material of the first belt cord in the spiral belt layer is nylon cord.

Here, the width W1 in the tire width direction of the inner zigzag belt layer having the maximum width in the tire width direction is preferably 102 to 110% of the width W2 in the tire width direction of the belt layer having the maximum width in the tire width direction among the spiral belt layer and the outer zigzag belt layer. This is because the wear resistance performance when the aircraft is turning can be further improved with the ratio of 102% or more, and the weight can be reduced with the ratio of 110%.

The width W1 of the inner zigzag belt layer with the maximum width in the tire width direction is preferably 90-110% of the tread width. This is because the wear resistance performance when the aircraft is turning can be further improved with the ratio of 90% or more, and the weight can be reduced with the ratio of 110%. The tread width refers to the distance in the tire width direction between the ground edges when the tire is grounded at room temperature, under maximum load and with prescribed internal pressure.

In this example, the width in the tire width direction of the outer zigzag belt layers 13a, 13b are both smaller than the width in the tire width direction of the spiral belt layer, which has the smallest width in the tire width direction among the spiral belt layers. This makes it difficult for the outer zigzag belt layer to be exposed during wear progression. However, this is not limited to this case, and the width in the tire width direction of any or all of the spiral belt layers may be smaller than the width in the tire width direction of any or all of the outer zigzag belt layers.

### EXAMPLES

In order to confirm the effect of this disclosure, an inventive example tire, and a comparative example tire, having a tire size of H44.5×16.5×R21 were manufactured as prototypes. The inventive and comparative example tires had a carcass consisting of five carcass plies made of nylon. The inventive example tire had a belt structure with two inner zigzag belt layers, six spiral belt layers, and two outer zigzag belt layers, from the inner side in the tire radial direction. The comparative example tire had a belt structure with two zigzag belt layers on the outer side of the tire radial direction of the six spiral belt layers. In the inventive and comparative example tires, the belt cords of the zigzag belt layer were nylon cords, and the belt cords of the spiral belt layer were aramid cords. The width W1 in the tire width direction of the inner zigzag belt layer having the maximum width in the tire width direction was 103% of the width W2 in the tire width direction of the belt layer having the maximum width in the tire width direction among the spiral belt layer and the outer zigzag belt layer.

The following tests were conducted on the inventive and comparative example tires:

### <Wear resistance performance in turning>

Since it is generally known that wear resistance performance in turning is proportional to the square of cornering power, the cornering power was predicted by simulation. Lateral forces were calculated when the slip angle was given 2 degrees.

### <Existence of belt exposure during wear>

In the simplest model, the distance traveled until the belt is exposed is considered to be proportional to the distance from the tread surface to the belt. Therefore, the distance from the tread surface to the belt, the shortest distance, was measured.

The inventive example tire showed a 10% increase in cornering power compared to the comparative example tire, and the distance from the tread surface to the belt was equivalent to the comparative example tire.

### REFERENCE SIGNS LIST

- 1: pneumatic tire for aircraft
- 3: Tread portion
- 38: Tread rubber
- 4: Sidewall portion
- 5: Bead portion
- 6: Bead core
- 61: Bead filler
- 7: Carcass
- 7a: Carcass ply
- 7b: Crown portion
- 10: Belt
- 11: Inner zigzag belt layers
- 12: Spiral belt layers
- 13: Outer zigzag belt layers
- 40: Applicable rim

## Claims

1. A pneumatic tire for aircraft comprising:
a pair of bead portions;
a carcass comprising one or more carcass plies spanning the pair of bead portions in a toroidal shape; and
a belt consisting of three or more belt layers disposed radially outwardly of the crown portion of the carcass; wherein
the belt includes,
one or more spiral belt layers consisting of a ribbon-like first strip member made with a first belt cord coated with rubber, spirally wound in the circumferential direction of the tire, and
two or more zigzag belt layers consisting of a ribbon-like second strip member made with a second belt cord coated with rubber, spirally wound in the circumferential direction of the tire so that the following manners are repeated: extending from one tire width direction end to the other tire width direction end, folded back at the other tire width direction end, extending from the other tire width direction end to the one tire width direction end, folded back at the one tire width direction end, and extending again from the one tire width direction end to the other tire width direction end,
the zigzag belt layers include one or more inner zigzag belt layers and one or more outer zigzag belt layers located outside the inner zigzag belt layers in the tire radial direction,
the belt layers are arranged in the following order from the inside of the tire radial direction: the inner zigzag belt layers, the spiral belt layers, and the outer zigzag belt layers, and
among the belt layers, the inner zigzag belt layer has the maximum width in the tire width direction.

2. A pneumatic tire for aircraft according to claim 1, wherein the width in the tire width direction of any of the one or more inner zigzag belt layers is greater than the width in the tire width direction of the spiral belt layer and the outer zigzag belt layer, which has the maximum width in the tire width direction.

3. A pneumatic tire for aircraft according to claim 1 or 2, wherein the elastic modulus of the second belt cord of the zigzag belt layers is less than the elastic modulus of the first belt cord of the spiral belt layers.
